(19) **Europäisches Patentamt**

**European Patent Office**

**Office européen des brevets**

(11) **EP 1 381 173 B1**

(12) **EUROPEAN PATENT SPECIFICATION**

(45) Date of publication and mention
of the grant of the patent:
**21.06.2006 Bulletin 2006/25**

(51) Int Cl.:
*H04B 7/08* (2006.01)

(21) Application number: **03254246.6**

(22) Date of filing: **03.07.2003**

(54) **Wireless communications apparatus for arrival direction detection**

Drahtlose Kommunikationsvorrichtung zur Empfangsrichtungserkennung

Appareil de communication sans fil pour la détection de la direction d'incidence

(84) Designated Contracting States:
**DE GB**

(30) Priority: **08.07.2002 JP 2002198989**

(43) Date of publication of application:
**14.01.2004 Bulletin 2004/03**

(73) Proprietor: **Hitachi Kokusai Electric Inc.**
**Tokyo 164-8511 (JP)**

(72) Inventors:
• **Kitahara, Minako**
**Hitachi Kokusai Electric, Inc.**
**Tokyo 164-8511 (JP)**

• **Miyatani, Tetsuhiko**
**Hitachi Kokusai Electric, Inc.**
**Tokyo 164-8511 (JP)**

(74) Representative: **Nicholls, Michael John**
**J.A. KEMP & CO.,**
**14, South Square,**
**Gray's Inn**
**London WC1R 5JJ (GB)**

(56) References cited:
**WO-A-02/03569**             **GB-A- 2 336 741**
**US-A1- 2002 048 286**

**Description**

This invention relates to a wireless communications apparatus that wirelessly receives signals using a plurality of antennas, and particularly to a wireless communications apparatus whereby the accuracy of detection of the average phase received by each antenna is increased, thus increasing the accuracy of detection of arrival of the received signal.

Such apparatus are e.g. disclosed in US 2002/0 048 286 A1 and WO 02/03569 A2.

When estimating the direction of arrival (arrival angle) of a signal that is received wirelessly by a base station unit having an adaptive antenna array, for example, information on the signals received by each antenna is used. For this reason, the accuracy of the phase of the signal received by each antenna affects the accuracy of estimation of the arrival direction.

Specifically, in the estimation of the arrival direction, the arrival angle is determined uniquely from the arrangement of antennas, the frequency of the signal and the phase differences among the signals received by the different antennas. For this reason, the accuracy of the information on phase differences among the signals received by the different antennas determines all or most of the accuracy of the estimation of the arrival direction. In this manner, in the estimation of arrival directions, it is important to increase the accuracy of the phase information on signals arriving to the various antennas.

However, the phase of the signal received by each antenna is affected by noise.

Specifically, taking $\theta$ to be the phase of a signal that arrives at a certain antenna (here called antenna A), $S$ to be the amplitude of this signal and $t$ to be the time, the phase of the noise signal applied to this signal at time $t$ may be expressed as $\Phi(t)$, and the amplitude of this noise signal at time $t$ may be expressed as $n(t)$, and then the I-phase component $S_{I1}$ of the signal arriving at this antenna A is given by Equation 1, while the Q-phase component $S_{Q1}$ of this signal is given by Equation 2.

$$SI1 = S \cdot \cos \theta + n(t) \cdot \cos \Phi(t) \qquad \dots \text{(Equation 1)}$$

$$SQ1 = S \cdot \sin \theta + n(t) \cdot \sin \Phi(t) \qquad \dots \text{(Equation 2)}$$

In order to detect the phase $\theta$ of the signal arriving at antenna A from the I-phase component and Q-phase component in this manner, it is necessary to eliminate the effects of the second-term components within Equations 1 and 2 above. To this end, the effects of the noise components are minimized by cumulatively adding the signals received by antenna A. As long as the phase $\theta$ of the signal received by antenna A does not fluctuate while such cumulative addition is being performed, it is possible to detect the phase $\theta$ of this signal received by antenna A, and the accuracy of estimating the arrival direction can be increased.

However, with an apparatus like that in the background art wherein the cumulative addition of received signals is used to detect the phase of the signals received by the various antennas and also estimate the arrival direction of the received signals, there are problems in that, for example, because of the effects of frequency fluctuations arising due to a certain amount of difference in frequency between the arriving signal and receiver and the effects of fading, the effects of improvement in the characteristics of phase information obtained are lessened due to the cumulative addition of received signals. Note that differences between the arriving signals and the receiver may arise because of errors between the transmitting frequency used by the transmitter on the transmitting side and the receiving frequency used by the receiver on the receiving side.

Specifically, taking $\theta(t)$ to be the phase at time $t$ of an arriving signal consisting of the I-phase component given in Equation 1 and the Q-phase component given in Equation 2 and $S(t)$ to be the amplitude at time $t$ of this arriving signal, the I-phase component $S_{I2}$ is given in Equation 3 while the Q-phase component $S_{Q2}$ is given in Equation 4.

$$SI2 = S(t) \cdot \cos \theta(t) + n(t) \cdot \cos \Phi(t) \qquad \dots \text{(Equation 3)}$$

$$SQ2 = S(t) \cdot \sin \theta(t) + n(t) \cdot \sin \Phi(t) \qquad \dots \text{(Equation 4)}$$

As an example, consider the case in which, when wireless communications are performed in frames, a signal whose phase rotates by 360° over four frames worth of time is cumulatively added for four frames. In this case, the phase $\theta(t)$ of this signal makes one rotation during four frames worth of time, so not only the second terms within Equations 3 and 4 above which are noise components but also the signal components in the first terms within Equations 3 and 4 above are also cancelled by the cumulative addition. As a result, there is a problem in that the accuracy of phase information for the signals received by the various antennas is degraded, and the accuracy of estimation of the arrival direction is also degraded.

The present invention was accomplished in order to solve these conventional problems and has as its object to provide a wireless communications apparatus whereby, when receiving signals wirelessly using a plurality of antennas, it is possible to improve the accuracy of detection of the average phase of signals received by the antenna and thus improve the accuracy of detection of the arrival direction of received signals.

In order to achieve these objects, when using a plurality of antennas to receive signals sent wirelessly from the transmitting side, a wireless communications apparatus according to the present invention detects the arrival direction of received signals in the following manner.

To wit, based on a signal received from the transmitting side, phase fluctuation detection means detects phase fluctuations arising in the signal in the interval from the transmitting side. Phase fluctuation correction means corrects the phase fluctuations detected by the phase fluctuation detection means with respect to the signals received by each antenna. Average phase detection means detects the average phase of the signals received by each antenna after correction of the phase fluctuation by the phase fluctuation correction means. Then, received signal arrival direction detection means detects the arrival direction of the received signals based on the average phase of the signals received by each antenna detected by the average phase detection means.

Accordingly, after the phase fluctuation in the signals received by each antenna is corrected, the average phase of the signals, detected by each antenna is detected, so it is possible to improve the detection accuracy of the signals received by each antenna. Moreover, by improving the detection accuracy of the signals received by each antenna, it is possible to improve the detection accuracy in the arrival direction of the received signals.

Here, the wireless communications apparatus may be constituted as a transceiver apparatus that has functions for receiving signals and functions for transmitting signals, for example, or it may be constituted as a receiver apparatus that has functions for receiving signals, for example.

In addition, various communication protocols can be used as the communication protocol; for example, Code Division Multiple Access (CDMA), Time Division Multiple Access (TDMA), Frequency Division Multiple Access (FDMA) or other communications protocols may be used.

In addition, various communications apparatus may be used on the transmitting side, as a transceiver apparatus that has functions for receiving signals and functions for transmitting signals may be used, for example, or a transmitter apparatus that has functions for transmitting signals may be used, for example.

As a specific example, when the wireless communications apparatus according to the present invention is be applied to a base station unit or a relay station unit, a mobile station unit, for example, may be used as the transmitting side.

In addition, various numbers may be used as the number of the plurality of antennas.

In addition, various types and arrangements may be used for the plurality of antennas.

In addition, as the mode of detecting the phase fluctuations that arise in the signals (received signals) in the interval from the transmitting side based on these signals received from the transmitting side, for example, a mode of detecting the phase fluctuation arising in the signal received by a representative single antenna may be used, or a mode of detecting the phase fluctuations arising in the signals received by two or more representative antennas may be used, or a mode of detecting the phase fluctuations arising in the signals received by each antenna when considering all antennas may be used.

In addition, the phase fluctuations arising in the signals (received signals) in the interval from the transmitting side may be detected as the sum of, for example, phase fluctuations caused by differences in frequency between the arriving signal and the receiver and phase fluctuations caused by fading in the wireless transmission path. Note that such phase fluctuations ordinarily occur in the same or similar modes regarding an arbitrary antenna, and in this case, the phase fluctuations detected for a single antenna can also be applied to other antennas.

In addition, as the phase fluctuations arising in the signals (received signals) in the interval from the transmitting side, phase fluctuations related to the actual communications signals, for example, may be detected. Specifically, upon receiving a signal consisting of the I-phase component given in Equation 3 and the Q-phase component given in Equation 4, for example, the phase fluctuations related to the signal components of the first terms of Equations 3 and 4 above corresponding to the actual communications signal are detected.

In addition, as the mode of correcting the phase fluctuations detected with respect to the signals received by each antenna, a mode in which phase fluctuations that cancel the detected phase fluctuations are applied to these received signals, for example, may be used.

In addition, as the mode of correcting the phase fluctuations with respect to the signals received by each antenna, a mode in which phase fluctuations that correct the phase fluctuations of signals received by all antennas based on the phase fluctuations of received signals detected for a single antenna, for example, may also be used.

In addition, as the average phase of the signals received by each antenna, a phase based on a temporally averaged received signal, for example, may be detected. As specific examples, a mode wherein a plurality of consecutive received signals are averaged and the phase resulting from this averaging is detected as the average phase, or a mode wherein a plurality of signals received within a stipulated period are averaged and the phase resulting from this averaging is detected as the average phase may be used. Note that various numbers may be used as the number of received signals used to detect the average phase.

In addition, taking the average of the received signals in this manner can reduce the effect that the noise signal added to the received signal has on the detected phase (average phase).

In addition, various ways of detecting the arrival direction of received signals may be used; for example, for the same signal received by a plurality of antennas, a way of detecting the arrival direction of the received signal based on the difference among antennas in the phase of this received signal (average phase) detected for each antenna may be used.

In addition, as the arrival direction of the received signal, the angle of the direction in which the received signal arrives when viewed from the wireless communications apparatus, for example, may be detected.

In addition, as the mode of detecting the arrival direction of the received signal, various modes of detecting the arrival direction of the received signal in an estimated manner may be used.

In addition, from the results of detecting the arrival direction of the received signal, it is possible to determine the direction in which the transmitting side that has wirelessly transmitted that received signal is presumed to be present, and thereby it is possible to control the directionality of transmitting by increasing or decreasing the strength of the signal transmitted in those directions in which the transmitting side is presumed to be present, and also control the directionality of receiving by increasing or decreasing the strength of the signal received in those directions in which the transmitting side is presumed to be present.

In addition, in one example of a wireless communications apparatus according to the present invention, a phase shift correction means corrects any shift in the phase arising in the received signal that is caused in the antenna system among different antennas. Moreover, a received signal arrival direction detection means detects the arrival direction of received signals based on the average phase of the signals received by each antenna after correction is performed by the phase shift correction means.

Accordingly, the arrival direction of received signals is detected based on the average phase of the signals received by each antenna after correction of the phase shift arising in the received signal caused in the antenna system among different antennas is performed, so the accuracy of detection of the arrival direction of received signals can be improved.

Here, each antenna system may be defined to be a system consisting of lines and circuits that process signals received by each antenna, for example. Various constitutions may be used for each antenna system.

In addition, assuming that the phase is identical at the time of receipt of the signal received by each antenna, the phase shift arising in the received signal caused in the antenna system among different antennas may be represented as a phase difference from the received signal arising among each antenna caused by the processing of the received signal by each antenna system.

In addition, as the mode of correcting the phase shift arising in the received signal caused by the antenna system among different antennas, a mode wherein a phase shift that cancels this phase shift is applied to this received signal, for example, may be used. Note that a phase shift that cancels the phase shift arising in the received signal may be set by means of measurement in advance or determination by logic, for example.

In addition, as the mode of detecting the arrival direction of the received signal based on the average phase of the signal received by each antenna after correction is performed by the phase shift correction means, a mode in which correction is performed by phase shift correction means before the average phase of the signals received by each antenna is detected, for example, may be used, or a mode in which correction is performed by the phase shift correction means after the average phase of the signals received by each antenna is detected may be used.

In addition, in a mode in which correction is performed by the phase shift correction means before the average phase of the signals received by each antenna is detected, for example, the average phase detection means detects the average phase of signals received by each antenna after the phase fluctuation is corrected by the phase fluctuation correction means and the phase shift is corrected by the phase shift correction means. In this case, the order in which the phase fluctuation correction means performs the process of correcting the phase fluctuation in the signals received by each antenna by and the phase shift correction means performs the process of correcting the phase shift in the signals received by each antenna may be arbitrary.

In addition, one example of the constitution of a wireless communications apparatus according to the present invention is a base station unit of a mobile communications system. In this wireless communications apparatus, the plurality of antennas consists of an adaptive antenna array. Moreover, in this wireless communications apparatus, an adaptive array processing means acquires the sum of the result of multiplying the signals received by each antenna by a reception weight for each antenna as the signal received by the aggregate of this plurality of antennas, and transmits from each antenna the result of multiplying the signal subject to transmission by a transmission weight for each antenna.

Accordingly, when wireless communication is performed using an adaptive antenna array, it is possible to detect the arrival direction of the received signals accurately.

Here, In addition, various systems such as cellular phone systems or Personal Handy phone Systems (PHS) may be used as the mobile communications system.

In addition, the base station unit of a mobile communications system receives signals transmitted wirelessly from mobile station units covered by the base station unit and also transmits signals to mobile station units covered by the base station unit.

In addition, with an adaptive antenna array, for example, for the same signal transmitted from the transmitting side, the sum of the results of multiplying the signal received by each antenna by the reception weight for each antenna is taken to be the signal received by the adaptive antenna array in aggregate, and in this case, it is possible to control the reception directionality of the adaptive antenna array in aggregate by controlling the reception weights for each antenna.

In addition, in the same manner, with an adaptive antenna array, for example, the results of multiplying the common signal to be transmitted by all antennas by the transmission weight for each antenna is transmitted wirelessly from each antenna, and in this case, it is possible to control the transmission directionality of the adaptive antenna array in aggregate by controlling the transmission weights for each antenna.

Note that if the frequency band for received signals is the same as the frequency band for transmitted signals, when wirelessly transmitting a signal to a wireless communications apparatus serving as the other party that has wirelessly transmitted a certain received signal, for example, it is possible to determine and utilize the transmission weights for each antenna from the reception weights for each antenna used for this received signal.

On the other hand, if the frequency band for received signals is different from the frequency band for transmitted signals, when wirelessly transmitting a signal to a wireless communications apparatus serving as the other party that has wirelessly transmitted a certain received signal, for example, it is preferable to use the transmission weights for each antenna calculated based on the results of estimation of the direction of arrival of this received signal.

Here follows a further example of the wireless communications apparatus according to the present invention.

As an example, the wireless communications apparatus according to the present invention consists of a base station unit of a mobile communications system that adopts the wideband W-CDMA protocol. In addition, in this wireless communications apparatus, the signals received by the plurality of antennas is a spread-spectrum signals. Moreover, with this wireless communications apparatus, despreading means despreads the spread signal received by the various antennas.

Accordingly, when wireless communications are performed using spread spectrum signals, it is possible to detect the arrival direction of received signals with good accuracy.

Here, the spread spectrum signals received by the wireless communications apparatus may be spread on the transmitting side, for example.

In addition, as an example, with the wireless communications apparatus according to the present invention, the signals received by a plurality of antennas are data-modulated signals. In addition, with this wireless communications apparatus, a data demodulation means demodulates the data modulation of the signals received by the various antennas. Moreover, average phase detection means detects the average phase of the signals received by each antenna after demodulation of data modulation by the data demodulation means and correction of the phase fluctuation by the phase fluctuation correction means.

Accordingly, the average phase of the signals received by each antenna is detected after demodulation of the data modulation of signals received by each antenna, so the average phase of the signals received by each antenna can be detected appropriately, so the arrival direction of the received signals can be detected appropriately.

Here, the signals received by this wireless communications apparatus may be data-modulated on the transmitting side, for example.

In addition, as the scheme of this demodulation of the data modulation of these data-modulated received signals, a scheme wherein conversion that cancels this data modulation is performed on these received signals may be used, for example. As an example, when data modulation in which a carrier signal or other stipulated signal is multiplied by data is used, this data modulation can be demodulated by multiplying the data-modulated received signals by data that cancels this data.

The invention will be further described by way of example with reference to the accompanying drawings, in which:-

Figure 1 is a diagram showing the configuration of a wireless communications apparatus having arrival direction estimation functions according to a first embodiment of the present invention;

Figure 2 is a diagram showing the configuration of a wireless communications apparatus having arrival direction estimation functions according to a second embodiment of the present invention; and

Figure 3 is a diagram showing an example of the relationship between the frequency offset between the transmitter and receiver and the arrival direction estimation error.

Here follows a description of embodiments of the present invention made with reference to drawings.

We shall first describe a first embodiment.

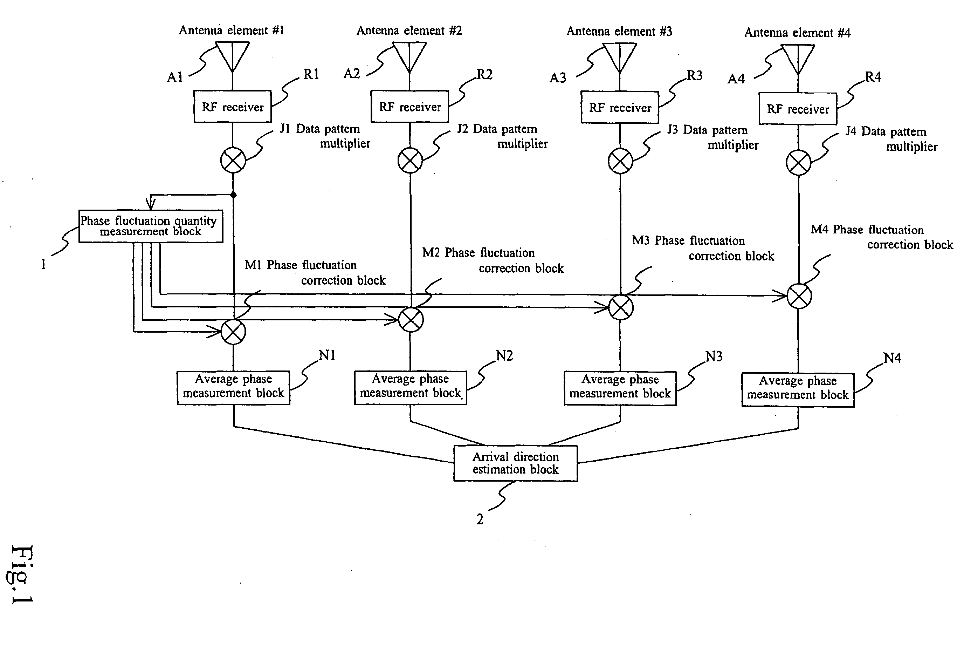

FIG. 1 shows an example of the wireless communications apparatus according to the present invention. The figure shows the portion of the structure pertaining to the arrival direction estimation function of the wireless communications apparatus according to this embodiment.

The wireless communications apparatus according to this embodiment is provided with four antenna systems. Each antenna system is provided with one antenna A1-A4, one RF receiver R1-R4, one data pattern multiplier J1-J4, one phase fluctuation correction block M1-M4, and one average phase measurement block N1-N4, respectively. In addition, in this embodiment, the antenna system of one antenna A1 is provided with a phase fluctuation quantity measurement block 1. In addition, in the wireless communications apparatus of this embodiment, a common arrival direction estimation block 2 is provided for the four antenna systems.

In this manner, in this embodiment, the four antenna systems have the same configuration with the exception that a phase fluctuation quantity measurement block 1 is provided in only one antenna system, so the various processing blocks A1-A4, R1-R4, J1-J4, M1-M4 and N1-N4 provided in each antenna system have the same configuration and operation.

Antennas A1-A4 are provided as antenna elements that make up an antenna array, for example. In this embodiment, the number of elements in the antenna array is four, so the total number of antennas A1-A4 is four. Other numbers may be used as the total number of antennas as long as it is two or more.

Signals in the radiofrequency (RF) band that are sent wirelessly from the transmitting side, for example, and arrive at the wireless communications apparatus according to this embodiment are received by the antennas A1-A4. The antennas A1-A4 output the received signals to the corresponding RF receivers R1-R4.

The RF receivers R1-R4 down-convert the signals input from the antennas A1-A4 from the RF band through an intermediate frequency (IF) to the baseband (BB) band, and output the down-converted received signals to the corresponding data pattern multipliers J1-J4.

Here, the received signals down-converted by the RF receivers R1-R4 to the BB band had been modulated by transmitted data on the transmitting side, for example. As one example, when the quadrature phase shift keying (QPSK) modulation scheme is used, the received signal is modulated to the state of one of the phases of $\pm\pi/4$ or $3\pi/4$.

The data pattern multipliers J1-J4 process the signals input from the RF receivers R1-R4 so that the output from these data pattern multipliers J1-J4 is returned to the same phase with regard to data modulation, and the processed signals are output to the corresponding phase fluctuation correction blocks M1-M4. Specifically, in this embodiment, the data pattern multipliers J1-J4 consist of complex multipliers, which take the signals input from the RF receivers R1-R4 and subject them to complex multiplication with the complex conjugates of the data pattern in the data modulation performed on this signal, thereby returning this signal which had been rotated by this data modulation to its original phase. Note that if there is no need to perform complex multiplication in the data pattern multipliers J1-J4 and only multiplication of real numbers is performed, the data pattern multipliers J1-J4 may consist of multipliers, for example.

Here, in the same manner as described in the background art, for example, with the wireless communications apparatus according to this embodiment also, cumulative addition of the signals received by the antennas A1-A4 is performed to detect the average phase of these received signals. In this embodiment, the signals output from the data pattern multipliers J1-J4 are used to perform the cumulative addition of received signals by the average phase measurement blocks N1-N4 provided in a latter stage. When cumulative addition of received signals is performed in this manner, if data modulation is applied to the received signals as described above, the received signals themselves are cancelled together, but in this embodiment, the data modulation applied to the received signals by the data pattern multipliers J1-J4 is demodulated and it is thus possible to guarantee the effectiveness of the cumulative addition of received signals.

In addition, in order to demodulate the data modulation by the data pattern multipliers J1-J4, each of the data pattern multipliers J1-J4 or their controllers (not shown) must know the data pattern in the data modulation applied to the received signal. In this embodiment, this is handled by using feedback of the data pattern known from the demodulated received signal or by using a data pattern known using a pilot signal consisting of a data pattern that is known between the transmitter and receiver.

In this embodiment, one antenna A1 among the four antennas A1-A4 is taken to be the reference antenna and the quantity of phase fluctuation in the received signals is detected with respect to this antenna A1 only.

To wit, the phase fluctuation quantity measurement block 1 uses the output from data pattern multiplier J1 provided for antenna A1 which is the reference antenna to examine changes in the phase of the signal received by this antenna A1 and measure the quantity of phase fluctuation in this received signal.

Specifically, with the phase fluctuation quantity measurement block 1 of this embodiment, for the signal input from data pattern multiplier J1, for example, several cycles to several dozen cycles of the input signal may be added (cumulatively added) and the average phase of the input signal is measured, and based on the results of this measurement, a quantity of phase change (correction phase) for correcting the quantity of fluctuation from the phase of the initial received signal is generated by the average phase measurement blocks N1-N4 (to be described later) at the time of the start of cumulative addition of received signals, and the correction phase thus generated is output to all of the phase fluctuation correction blocks M1-M4.

To wit, while the phase fluctuation quantity measurement block 1 performs the cumulative addition of a plurality of cycles of received signals by the average phase measurement blocks N1-N4 (to be described later), the difference between the phase of the first cycle of received signals thus cumulatively added and the phase of the second and subsequent cycles of received signals is sequentially detected as the quantity of phase fluctuation, so correction terms (correction phases) that are able to correct the phase fluctuation quantities thus detected are sequentially generated, and the correction terms thus generated are sequentially output to each of the phase fluctuation correction blocks M1-M4.

Note that in this embodiment, the effect of the phase fluctuation is generally thought to be common to all of the antennas A1-A4 so a configuration is adopted wherein a phase fluctuation quantity measurement block 1 is provided for only a single antenna A1, but as an example of another configuration, it is possible to provide phase fluctuation quantity measurement blocks for each of the antennas A1-A4 and thus generate correction phases. Note that in a configuration in which correction phases are found for each of the antennas A1-A4, it is necessary to make sure that it is not affected by differences in the phases (average phases) of the received signals between different antennas referenced at the time of estimating the arrival direction of received signals.

In addition, this embodiment assumes the case of receiving a signal such as that indicated in Equations 3 or 4 above, for example, and as a preferred embodiment, after eliminating or reducing the effect of the temporal fluctuation of $S(t)$ and also eliminating or reducing the effects of the noise $n(t) \cdot \cos(\Phi)(t)$ and $n(t) \cdot \sin\Phi(t)$, information regarding the phase fluctuation quantity $\theta(t)$ is then detected. Specifically, in this embodiment, the temporal fluctuation of $S(t)$ may be eliminated or reduced by the processing of the data pattern multipliers J1-J4, for example, and the noise may be eliminated or reduced by the process of averaging a plurality of cycles of received signals by the phase fluctuation quantity measurement block 1, for example.

Note that the processing of the data pattern multipliers J1-J4 is able to eliminate the effects of the temporal phase fluctuations due to data modulation performed on the received signal, for example. In addition, with the process of averaging a plurality of cycles of received signals by the phase fluctuation quantity measurement block 1, the amplitude and phase of the noise is generally random, so even if the amplitude of noise is not brought to zero by averaging, it can be reduced to a level that is effective in practice.

In addition, in this embodiment, the quantity of phase fluctuation measured by the phase fluctuation quantity measurement block 1 may contain components caused by frequency shift (frequency drift) between the transmitter that transmits the signal and the receiver that receives the signal, components caused by fading in the wireless transmission path, for example, and the like.

The phase fluctuation correction blocks M1-M4 may consist of complex multipliers, for example, subject the data-demodulated signals input from the data pattern multipliers J1-J4 to complex multiplication with the correction phase input from the phase fluctuation quantity measurement block 1, and output the signal after complex multiplication to the respective average phase measurement blocks N1-N4. Note that if there is no need to perform complex multiplication in the phase fluctuation correction blocks M1-M4 and only multiplication of real numbers is performed, the phase fluctuation correction blocks M1-M4 may consist of multipliers, for example.

Here, with the I-phase component and Q-phase component of the received signal before complex multiplication of the correction phase by the phase fluctuation correction blocks M1-M4, the signal components corresponding to the first terms of Equations 3 and 4 above fluctuate temporally, but by performing complex multiplication with the correction phase as in this embodiment, it is possible to eliminate or reduce temporal fluctuation of these signal components. Thereby, with the output from the average phase measurement blocks N1-N4 (to be described later), it is possible to acquire the difference in the phase (average phase) among the antennas A1-A4.

The average phase measurement blocks N1-N4 cumulatively add (perform cumulative addition of) the signals after correction of phase fluctuation input from the phase fluctuation correction blocks M1-M4, thereby averaging the signals, and also detect the phase of the signal corresponding to the results of this averaging and output the results of detection to the arrival direction estimation block 2.

Here, with the average phase measurement blocks N1-N4 according to this embodiment, averaging is performed on a larger number of cycles of a signal than the number of cycles over which averaging is performed in order to find the correction phase in the phase fluctuation quantity measurement block 1 above, for example.

As one example, taking m to be a plurality of values and if $p$ is given as $(2p+1) < m$, the average phase measurement blocks N1-N4 take the signal received at a certain point in time as received signal 1, and average the received signals 1 through $m$ to detect the phase of this averaged signal as the average phase. At this time, when the phase fluctuation quantity measurement block 1 detects the phase fluctuation quantity in received signal $x$ ($1 \leq x \leq m$), it averages the received signals from $(x-p)$ to $(x+p)$ and detects the shift of the phase of this averaged signal from the initial phase as the phase fluctuation quantity. Note that in this case, the phase obtained from the phase fluctuation quantity measurement block 1 for received signal 1 is used as the initial phase.

As described above, the phase fluctuation quantity measurement block 1 measures the phase fluctuation quantity of received signals, corrects the phase of the received signals with the phase fluctuation correction blocks M1-M4 depending on the quantity of phase fluctuation thus measured, and thus passes the corrected received signals to the average phase measurement blocks N1-N4. When the cumulative addition of received signals is started, the average phase measurement blocks N1-N4 take the phase of the first received signal measured by the phase fluctuation quantity measurement block 1 as the initial phase. In this embodiment, correction of the phase of this received signal 1 (initial phase) is not performed.

Moreover, after the initial phase is determined, the difference between the initial phase and the phases of each cycle of received signal as measured by the phase fluctuation quantity measurement block 1 is taken to be the quantity of phase fluctuation, and phase correction of each cycle of received signal is performed by each of the phase fluctuation correction blocks M1-M4, and the results of this phase correction are input to each of the average phase measurement blocks N1-N4. By this process, the plurality of cycles of received signals averaged by the average phase measurement blocks N1-N4 become signals of matching phase after removal of the effects of noise that could not be eliminated by averaging with the phase fluctuation quantity measurement block 1, for example.

In addition, the optimal value of the number of cycles averaged ($2p+1$) by the phase fluctuation quantity measurement block 1 may be different depending on the speed of rotation of the received signal, for example. The time required for averaging by the phase fluctuation quantity measurement block 1 is preferably within the time in which the quantity of phase rotation of the received signals is 90° or less, for example. The reason for this is because, if the phase of a plurality of cycles of symbols (received signals) differs greatly, this degrades the reliability of the quantity of phase fluctuation measured by the phase fluctuation quantity measurement block 1 and the reliability of the average phase measured by the average phase measurement blocks N1-N4.

In addition, in this manner, when the average phase measurement blocks N1-N4 average a larger number of cycles of received signals than the phase fluctuation quantity measurement block 1, they are thought to be more easily affected by the phase of the received signal rotating than the phase fluctuation quantity measurement block 1. However, in this regard, with this embodiment, since the correction phase is applied to the received signals by the phase fluctuation correction blocks M1-M4, it is possible to suppress the effects of phase fluctuation arising in the received signals, so it is possible to increase the number of cycles of averaging of signals in the average phase measurement blocks N1-N4 and increase the effect of this averaging.

As one example, when wireless communications are performed by frame, even in the case in which a signal that rotates its phase by 360° during the time of four frames, it is possible to prevent or reduce the cancellation by cumulative addition of signal components corresponding to the first terms of Equations 3 and 4 above.

Note that when the number of cycles of averaging of a signal increases, the arrival angle itself of this signal typically fluctuates during the period of this average, so as a preferred embodiment, it is preferable to use a number of cycles of averaging that is able to reduce the effects of noise and interference as much as possible and follow the fluctuations in the arrival angle of the signal.

The arrival direction estimation block 2 inputs from each of the average phase measurement blocks N 1-N4 phase information (average phase) for the signals received by each antennas A1-A4. and as the process of estimating the arrival direction of the received signals, the arrival angle of the received signal may be estimated based on phase information for two or more of the antennas A1-A4, for example. Here, various processes can be used as the process of estimating the arrival direction performed by the arrival direction estimation block 2; for example, the generally known MUSIC method, ESPIRIT method and others may be used.

Note that in this example, each of the antennas A1-A4 is provided with complex multipliers as the data pattern multipliers J1-J4 and complex multipliers as the phase fluctuation correction blocks M1-M4. To wit, each of the antennas A1-A4 is provided with two complex multipliers. However, as an example of another configuration, in the antennas A2-A4 other than antenna A1 which finds the correction phase, it is possible to use a common complex multiplier as both the complex multiplier of the data pattern multipliers J1-J4 and the complex multiplier of the phase fluctuation correction blocks M1-M4. In this manner, any circuit configuration may be used as long as the results of signal processing are essentially unchanged.

In addition, the data pattern multipliers J1-J4 and phase fluctuation correction blocks M1-M4 are provided in the antennas A1-A4 used to estimate the arrival direction of received signals, and in the case that there are antennas not used for the estimation of the arrival direction of the received signals, for example, there is no need to provide data pattern multipliers and phase fluctuation correction blocks.

In this manner, the wireless communications apparatus according to this embodiment has $n$ ($n$ is a real number equal to 2 or greater) antennas and performs the following processing as the scheme of estimating the arrival direction of a specific received signal.

To wit, $n$ data pattern multipliers take the signals received by each antenna and subject them to complex multiplication with the complex conjugates of the data pattern, thereby demodulating the data modulation of this received signal; one or more phase fluctuation quantity measurement blocks measure the quantity of phase fluctuation in the received signal caused by the quantity of frequency shift arising between transmitter and receiver or other causes; two or more phase fluctuation correction blocks provided on two or more antennas used for estimation of the arrival direction correct the phase fluctuations in the signals received by the various antennas using output from the phase fluctuation quantity measurement blocks; two or more average phase measurement blocks provided on two or more antennas used for estimation of the arrival direction measure the average phase of the signals received by the various antennas by averaging the signals after phase fluctuation correction; and one arrival direction estimation block uses the output of at least two of the average phase measurement blocks to estimate the arrival direction of the received signals.

In this manner, with the wireless communications apparatus according to this embodiment, the quantity of frequency fluctuation in the signals received by at least one of the plurality of antennas is measured, the frequency fluctuation in the signals received by each of the plurality of antennas is corrected using the quantity of frequency fluctuation thus measured, the average phase of each of the corrected signals is measured, and the arrival direction of the received signals is estimated using the average phase thus measured and other information.

Accordingly, with the wireless communications apparatus according to this embodiment, even in the case that there are effects of frequency fluctuations arising due to differences in frequency between the wireless communications apparatus according to this embodiment which is the receiving side and the wireless communications apparatus which is the sending side, or there are effects of phase fluctuation or frequency fluctuation due to fading or the like, it is possible to eliminate these effects and thus detect the phase of the signals (average phase) received by the various antennas in the situation in which the effects of noise are small. For this reason, with the wireless communications apparatus according to this embodiment, even if frequency fluctuations as described above are present, the estimation of arrival directions can be performed with no deterioration in accuracy, and the accuracy of the estimation of the arrival direction of received signals can be improved in comparison to the background art, for example.

As a specific example, when the wireless communications apparatus according to this embodiment is applied to a base station unit, it is possible to eliminate the effects of differences in frequency between the base station and the terminal unit (mobile station unit) serving as the other party, and achieve accurate estimation of arrival directions. In addition, when the wireless communications apparatus according to this embodiment is applied to communications equipment that has an adaptive antenna array or other antenna array consisting of a plurality of antennas, the accuracy of estimation of arrival directions can be improved, so the characteristics of the antenna array system can be improved.

Note that with the wireless communications apparatus according to this embodiment, the phase fluctuation detection means is constituted by the functions of the phase fluctuation quantity measurement block 1, the phase fluctuation correction means is constituted by the functions of the phase fluctuation correction blocks M1-M4, the average phase detection means is constituted by the functions of the average phase measurement blocks N1-N4, and the received signal arrival direction detection means is constituted by the functions of the arrival direction estimation block 2, while the data demodulation means is constituted by the functions of the data pattern multipliers J1-J4.

We shall next describe a second embodiment.

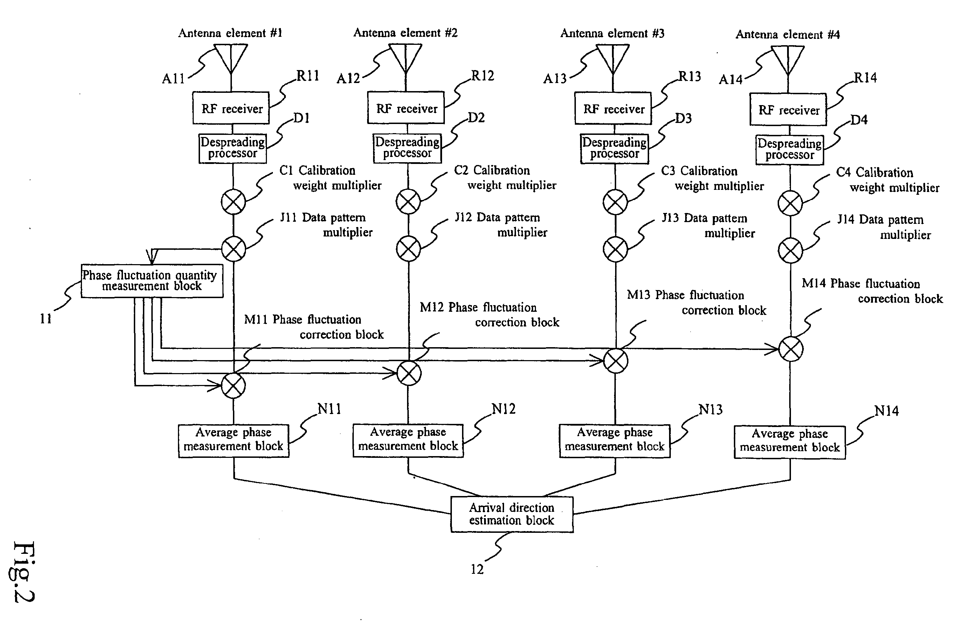

FIG. 2 shows an example of the wireless communications apparatus according to the present invention. The figure shows the portion of the structure pertaining to the arrival direction estimation function of the wireless communications apparatus according to this embodiment.

The wireless communications apparatus according to this embodiment is provided with four antenna systems. Each antenna system is provided with one antenna A11-A14, one RF receiver R11-R14, one despreading processor D1-D4, one calibration weight multiplier C1-C-4, one data pattern multiplier J11-J14, one phase fluctuation correction block M11-M14, and one average phase measurement block N1-N4, respectively. In addition, in this embodiment, the antenna system of one antenna A1 is provided with a phase fluctuation quantity measurement block 11. In addition, in the wireless communications apparatus of this embodiment, a common arrival direction estimation block 12 is provided for the four antenna systems.

Here, the configuration illustrated in the figure and its operation may be identical to the configuration and operation illustrated in FIG. 1 above, for example, with the exception that each antenna system is provided with a despreading processor D1-D4 and calibration weight multiplier C1-C4 between the RF receiver R11-R14 and data pattern multiplier J11-J14.

Here follows a detailed description of those portions of the configuration and operation that differ from the configuration and operation illustrated in FIG. 1 above.

The wireless communications apparatus according to this embodiment is applied to a base station unit of a mobile communications system that adopts the W-CDMA protocol. Note that the spread-spectrum transmitted from the mobile station unit is a signal that may be spread in the mobile station unit using a spreading code allocated to that mobile station unit, for example.

The RF receivers R11-R14 of this embodiment output down-converted received signals to the corresponding despreading processors D1-D4.

The despreading processors D1-D4 despread the received signals thus input and output these despreaded received signals to the respective calibration weight multipliers C1-C4. Here, the despreading of received signals may be performed using spreading codes (spreading codes used for each user) that are allocated to the mobile station units on the sending side that had wirelessly transmitted the received signals, or namely using the same spreading codes as the spreading codes used in the spreading of the received signals.

Each of the calibration weight multipliers C1-C4 may consist of a complex multiplier, for example, which subjects the received signals thus input to complex multiplication with a correction term that corrects the phase shift arising in each antenna system among the different antennas, and outputs the received signals after complex multiplication to each of the respective data pattern multipliers J11-J14. Note that if there is no need to perform complex multiplication in the calibration weight multipliers C1-C4 and only multiplication of real numbers is performed, the calibration weight multipliers C 1-C4 may consist of multipliers, for example.

Specifically, in the signal paths of each antenna system up until the received signals are down-converted, phase fluctuations may occur independently in each antenna system in the signal received from each of the antennas A11-A14 due to automatic gain control (AGC), dispersion in the electrical characteristics of the components used, differences in the pattern lengths of the wiring and other factors. Moreover, if phase fluctuations arising between the transmitter and receiver or in the propagation path, namely if such phase fluctuations other than the phase fluctuations measured by the phase fluctuation quantity measurement block 11 are present, then phase shift occurs among the antennas, thus obstructing the estimation of the arrival direction of received signals.

Thus, in this embodiment, in order to eliminate phase shift among antennas caused by hardware as described above, calibration weight multipliers C1-C4 that multiply the signals received by each of the antennas A1-A4 by calibration weights c1-c4 able to cancel this phase shift are provided. By performing calibration of each antenna system in this manner, the phase differences in received signals among antennas at the ends of a plurality of antennas A1-A4 are kept so that there is no shift due to the processing of each antenna system.

Note that various calculation methods may be used as the method of calculating the calibration weights c1-c4. Specific examples include the calibration weight calculation methods recited in *Indoor Transmission Test Characteristics of Adaptive Array Antenna Transmission Diversity in W-CDMA Downlinks* (Harada, et al., Technical Report of IEICE, RCS99-18 (1999-05)), *Study of Calibration of RF Transmitter/ Receiver Circuits in W-CDMA Downlink Adaptive Array Antenna Transmission Diversity* (Harada, Tanaka, Sawahashi, Adachi, Technical Report of IEICE, RCS99-101 (1999-08)) and *Automatic Calibration Method for Adaptive Arrays Used in FDD Systems Taking Antenna Characteristics into Consideration* (Nishimori, Cho, Takatori, Hori, Technical Report of IEICE, RCS99-213, MW99-233 (2000-02)). In addition, other reference literature includes *Background Wireless Circuit Configuration Scheme for Antenna Arrays and its Function* (Takakusaki, et al., Technical Report of IEICE, RCS2001-261 (2002-03)).

In addition, the wireless communications apparatus according to this embodiment is applied to systems that have an adaptive antenna array. In an adaptive antenna array that has $n$ ($n$ is a real number equal to 2 or greater) antennas, spatial interference is eliminated by controlling the weights of each antenna, thus controlling the phase and amplitude of the signal received by each antenna.

For example, when a base station unit is provided with an adaptive antenna array, for example, it is possible to use the N-LMS or other algorithms to obtain optimal antenna weights as the antenna weights for the uplink circuit (communications circuit from the mobile station unit to the base station unit). Moreover, if the same frequency band is used for both the uplink circuit and downlink circuit (communications circuit from the base station unit to the mobile station unit), the antenna weights for the uplink circuit can be applied to the downlink circuit.

However, with the frequency division duplex (FDD) scheme wherein a different frequency band is used for communications on the uplink circuit and downlink circuit, if the antenna weights for the uplink circuit are applied as is to the downlink circuit, these will not be the optimal antenna weights. Thus, if the results of estimating the arrival direction are used in order to calculate the antenna weights for the downlink circuit also, it is possible to send with the optimal antenna weights on the downlink circuit in the FDD scheme, so the characteristics of the downlink circuit are improved.

With the wireless communications apparatus according to this embodiment, it is possible to obtain accurate results from estimating the arrival direction, and by using these accurate results, it is possible to achieve improvements in the characteristics of the downlink circuit even when a FDD scheme is used, for example.

Moreover, with a system that adopts the W-CDMA protocol using the FDD scheme, the capacity of the downlink circuit is said to determine the number of users handled, so by improving the characteristics of the downlink circuit as in this embodiment, it is possible to increase the number of users handled per base station unit. Accordingly, by applying the wireless communications apparatus according to this embodiment to a W-CDMA system, it is possible to reduce infrastructure construction costs, for example, and as a result it is possible to construct a low-cost cellular telephone network.

As described above, with the wireless communications apparatus according to this embodiment, in a scheme having $n$ ($n$ is a real number equal to 2 or greater) antennas where the average phase of the received signals is detected using the results of correcting the phase fluctuation of the signals received by each antenna and the arrival direction of a specific received signal is estimated, the following processing is performed.

To wit, two or more calibration weight multipliers provided for two or more antennas used for estimation of the arrival direction perform calibration of each antenna system, so the phase differences in received signals among antennas at the ends of two or more antennas are kept. In addition, with this embodiment, spread-spectrum signals are received and *n* despreading processors despread the signals received by each antenna.

In addition, the wireless communications apparatus according to this embodiment is installed in a W-CDMA system and is provided in a base station unit that performs wireless communications using an adaptive antenna array. Moreover, an accurate arrival direction estimation scheme as in this embodiment and its output results are incorporated and used in the functional portions that calculate the weights (weighting coefficients) used during transmission and reception in adaptive antenna array control, for example.

Note that the order of arrangement of the despreading processors D1-D4, calibration weight multipliers C1-C4, data pattern multipliers J11-J14 and phase fluctuation correction blocks M11-M14 is preferably the order of arrangement indicated in FIG. 2 above, for example, but they may also be arranged in other orders. Specifically, the despreading processors D1-D4 and calibration weight multipliers C1-C4 may be provided in various locations, and also, regarding the other processing blocks J11-J14 and M11-M14, it is preferable that the order of processing by these processing blocks J11-J14 and M11-M14 be not changed.

In addition, various arrangements may be used as the arrangement of the complex multipliers including the complex multipliers of the calibration weight multipliers C1-C4 and the complex multipliers of the data pattern multipliers J11-J14, as long as the results of processing are essentially unchanged, for example.

As one example, the calibration weight multipliers C1-C4 may be provided immediately after the RF receivers R11-R14, or it may also be provided within the arrival direction estimation block 12.

Note that with the wireless communications apparatus according to this embodiment, the phase shift correction means is constituted by the functions of the calibration weight multipliers C1-C4, the despreading means is constituted by the functions of the despreading processors D1-D4, and the adaptive array processing means is constituted by the functions of performing control processing regarding the adaptive antenna array.

Here follows an example of the results of an experiment investigating the effects that the phase fluctuation correction processing of received signals according to this invention have on the results of estimating the arrival direction.

In this experiment, we applied a frequency shift (frequency offset) to the frequencies used in wireless communications between the transmitter and receiver, and examined its effects on the accuracy of estimation of the arrival direction. In addition, a W-CDMA system that uses the 1950 MHz frequency for communications was used.

Moreover, in this experiment, wireless communications were performed in units of frames, where one frame is 10 ms in length. For example, the averaging of a received signal over four frames was performed in the average phase measurement blocks N11-N14 illustrated in FIG. 2. At this time, if the frequency offset is 25 Hz, then the phase makes a full rotation over four frames.

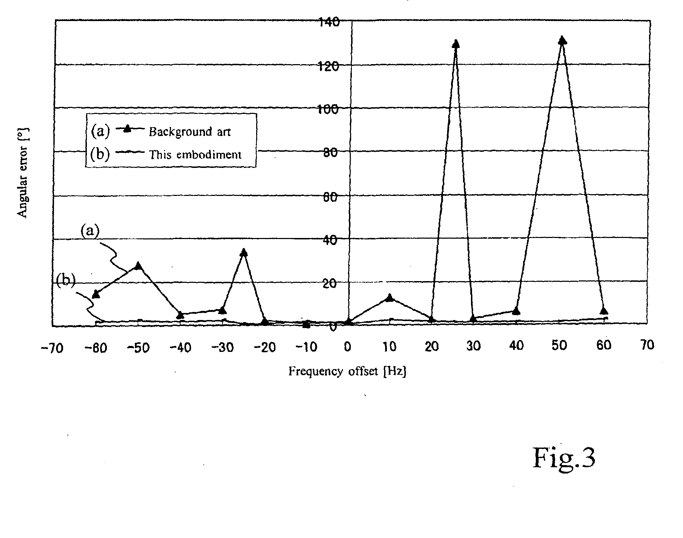

FIG. 3 presents the results obtained in this experiment, illustrating one example of the relationship between the quantity of the frequency offset [Hz] between the transmitter and receiver and the error [°] in the arrival angle estimated by means of estimation of the arrival direction. In addition, in the figure, "(a) Background art" indicates the results obtained with a configuration such as that shown in FIG. 2 above, but in which the phase fluctuation quantity measurement block 11 and phase fluctuation correction blocks M 11-M 14 are not provided, while "(b) This embodiment" indicates the results obtained with the configuration shown in FIG. 2 above. Note that the horizontal axis indicates the frequency offset [Hz] while the vertical axis indicates the angular error [°] in the results of estimating the arrival direction.

As shown in the figure, the "(a) Background art" line shows that the characteristics of the angular error deteriorate every 25 Hz in the frequency offset. In contrast, the "(b) This embodiment" line shows that there is no larger deterioration in the accuracy of estimation of the arrival direction even when a frequency offset is present. In this manner, by performing the arrival direction estimation process according to this invention, it is possible to maintain a high accuracy of estimation of the arrival direction even in the case that phase fluctuations occur in the received signal.

Here, the constitution of the wireless communications apparatus according to the present invention is not necessarily limited to that presented above, but rather various constitutions may be used. Note that the present invention may also be provided as a method of executing the process according to the present invention, or as a computer program for implementing such a method.

In addition, the applicable fields of the present invention are not necessarily limited to those illustrated above, but rather the present invention may be applied to various fields.

In addition, the various processing performed in the wireless communications apparatus or the like according to the present invention may be constituted by being implemented in hardware resources equipped with a processor and memory and the like, for example, being controlled by means of a processor executing a control program stored in read-only memory (ROM). In addition, the various functional means for executing this processing may also be constituted as independent hardware circuits.

In addition, the present invention may also be understood as one wherein the above control program (itself) is stored in a floppy disc®, CD-ROM or other computer-readable recording media, so that the processing according to the present invention can be implemented by loading said control program from the recording medium into a computer and executing the program by a processor.

As described above, with the wireless communications apparatus according to the present invention, when receiving signals wirelessly using a plurality of antennas, based on a signal received from the transmitting side, phase fluctuations arising in the signal in the interval from the transmitting side are detected, the detected phase fluctuations with respect to the signals received by each antenna are corrected, the average phase of the signals received by each antenna after correction of the phase fluctuation are detected, and then the arrival direction of the received signals is detected based on the average phase of the signals received by each antenna, so it is possible to improve the accuracy of detection of the average phase of signals received by the antenna and thus improve the accuracy of detection of the arrival direction of received signals.

In addition, with the wireless communications apparatus according to the present invention, as one example, phase shifts arising in the received signal that is caused in the antenna system among different antennas are corrected, and the arrival direction of the received signal is detected based on the average phase of the signals received by the various antennas after this correction is performed, so it is possible to further improve the accuracy of detection of the arrival direction of received signals.

In addition, as one example, the wireless communications apparatus according to the present invention constitutes the base station unit of a mobile communications system and the plurality of antennas constitutes an adaptive antenna array. Moreover, in this apparatus, the sum of the result of multiplying the signals received by each antenna by a reception weight for each antenna as the signal received by the aggregate of this plurality of antennas is acquired. The result of multiplying the signal subject to transmission by a transmission weight for each antenna is transmitted from each antenna. In this configuration, when wireless communications are performed using an adaptive antenna array, it is possible to accurately detect the arrival direction of received signals and thus improve the characteristics of adaptive antenna array control.

## Claims

1. A wireless communications apparatus that uses a plurality of antennas (A1-A4) to receive signals transmitted wirelessly from the transmitting side wherein:

   the wireless communications apparatus comprises:

   phase fluctuation detection means (1) that detects phase fluctuations arising in the signal in the interval from the transmitting side based on a signal received from the transmitting side,
   phase fluctuation correction means (M1-M4) that corrects the phase fluctuations detected by the phase fluctuation detection means with respect to the signals received by each antenna,
   average phase detection means (N1-N4) that detects the average phase of the signals received by each antenna after correction of the phase fluctuation by the phase fluctuation correction means, and
   received signal arrival direction detection means (2) that detects the arrival direction of the received signals based on the average phase of the signals received by each antenna detected by the average phase detection means.

2. A wireless communications apparatus according to claim 1, wherein:

   the phase fluctuation detection means detects the phase fluctuation arising in the signal received by a representative single antenna, and
   the phase fluctuation correction means corrects the phase fluctuation arising in the signals received by all antennas based on the phase fluctuation detected in this single antenna by the phase fluctuation detection means.

3. A wireless communications apparatus according to claim 1 or 2, wherein:

   the average phase detection means averages a plurality of received signals and detects the phase resulting from this averaging as the average phase of the signals received by the various antennas.

4. A wireless communications apparatus according to any of claims 1-3, wherein:

for the same signal received by a plurality of antennas, the received signal arrival direction detection means detects the arrival direction of the received signal based on the difference among antennas in the average phase detected by the average phase detection means for each antenna.

5. A wireless communications apparatus according to any of claims 1-4, wherein:

the wireless communications apparatus further comprises:

phase shift correction means (C1-C4) that corrects any shift in the phase arising in the received signal that is caused in the antenna system among different antennas; and
the received signal arrival direction detection means detects the arrival direction of received signals based on the average phase of the signals received by each antenna after correction is performed by the phase shift correction means.

6. A wireless communications apparatus according to any of claims 1-5, wherein:

the signals received by a plurality of antennas are data-modulated signals, and
the wireless communications apparatus further comprises:

data demodulation means (J1-J4) that demodulates the data modulation of the signals received by the various antennas; and
the average phase detection means detects the average phase of the signals received by each antenna after demodulation of data modulation by the data demodulation means and correction of the phase fluctuation by the phase fluctuation correction means.

7. A wireless communications apparatus according to any of claims 1-6, wherein:

the wireless communications apparatus constitutes a base station unit of a mobile communications system, and
in this wireless communications apparatus, the plurality of antennas constitutes an adaptive antenna array, and
the wireless communications apparatus further comprises:

an adaptive array processing means that performs the process of acquiring the sum of the result of multiplying the signals received by each antenna by a reception weight for each antenna as the signal received by the aggregate of this plurality of antennas, and the process of transmitting from each antenna the result of multiplying the signal subject to transmission by a transmission weight for each antenna.

8. A wireless communications apparatus according to any of claims 1-7, wherein:

the wireless communications apparatus constitutes a base station unit of a mobile communications system that adopts the CDMA protocol,
the signals received by the plurality of antennas are spread-spectrum signals,
and the wireless communications apparatus further comprises:

despreading means that despreads the spread signal received by the various antennas.

9. A wireless communications apparatus according to any of claims 1-8, wherein:

the wireless communications apparatus comprises a plurality of antenna systems (A11-A14);
each antenna system comprises one antenna, one RF receiver (R11-R14), one data pattern multiplier (J11-J14), one phase fluctuation correction block (M11-M14), and one average phase measurement block (N11-N14), respectively,
one antenna system among this plurality of antenna systems (A11) is taken to be the reference antenna system, and
the reference antenna system comprises a phase fluctuation quantity measurement block (11),
a common arrival direction estimation block (12) is provided for the plurality of antenna systems, and
the antennas of this plurality of antenna systems constitute an adaptive antenna array;
in each antenna system,
the antenna receives signals and outputs the received signals to the RF receiver,

the RF receiver converts the received signals input from the antenna from a wireless frequency band to a baseband band, and output the converted received signals to the data pattern multiplier, and

the data pattern multiplier processes the signals input from the RF receiver so that the output from the data pattern multiplier is returned to the same phase with regard to data modulation, and outputs the processed signals to the phase fluctuation correction block;

in the reference antenna system,

the phase fluctuation quantity measurement block uses the output from a data pattern multiplier (J11) provided for the antenna of the reference antenna system to detect the phase fluctuation quantity of the signal received by the antenna, generates correction terms that are able to correct the phase fluctuation quantities thus detected, and outputs the correction terms thus generated to the phase fluctuation correction block of each antenna system;

in each antenna system,

the phase fluctuation correction block multiplies the signal input from the data pattern multiplier with its data modulation demodulated by the correction term input from the phase fluctuation quantity measurement block of the reference antenna system, and outputs the multiplied signal to the average phase measurement block, and

the average phase measurement block averages the signal input from the phase fluctuation correction block after correction of phase fluctuation, detects the phase of the signal corresponding to the results of this averaging as the average phase, and outputs the results of this detection to the arrival direction estimation block; and

the arrival direction estimation block inputs from the average phase measurement blocks of each antenna system the average phase for the signals received by each of the antennas as phase information and estimates the arrival direction of the received signals based on phase information for two or more of the antennas.

10. A wireless communications apparatus according to claim 9, wherein:

each antenna system further comprises a despreading processor (D1-D4) and a calibration weight multiplier (C1-C4) between the RF receiver and data pattern multiplier,

in each antenna system,

the RF receiver outputs frequency-converted received signals to the despreading processor,

the despreading processor despreads the received signals input from the RF receiver and outputs these despreaded received signals to the calibration weight multiplier,

the calibration weight multiplier multiplies the received signals input from the despreading processor by a correction term that corrects the phase shift arising in each antenna system among the different antennas, and outputs the received signals after this multiplication to the data pattern multiplier, and

the data pattern multiplier performs processing on the received signals input from the calibration weight multiplier.

## Patentansprüche

1. , Drahtlose Datenübertragungsvorrichtung, die eine Mehrzahl von Antennen (A1-A4) verwendet, um Signale zu empfangen, die drahtlos von der Sendeseite gesendet werden, wobei:

die drahtlose Datenübertragungsvorrichtung umfasst:

ein Phasenschwankungs-Detektionsmittel (1), das basierend auf einem Signal, das von der Sendeseite empfangen wird, Phasenschwankungen detektiert, die in dem Signal in dem Intervall von der Sendeseite auftreten,

ein Phasenschwankungs-Korrekturmittel (M1-M4), das bezüglich der Signale, die von jeder Antenne empfangen werden, die Phasenschwankungen korrigiert, die von dem Phasenschwankungs-Detektionsmittel detektiert werden,

ein Detektionsmittel (N1-N4) für eine mittlere Phase, das nach der Korrektur der Phasenschwankung durch das Phasenschwankungs-Korrekturmittel die mittlere Phase der Signale detektiert, die von jeder Antenne empfangen werden, und

ein Empfangssignal-Empfangsrichtungs-Detektionsmittel (2), das auf der Grundlage der mittleren Phase der Signale, die von jeder Antenne empfangen werden, welche durch das Detektionsmittel für die mittlere Phase detektiert wird, die Empfangsrichtung der empfangenen Single detektiert.

2. Drahtlose Datenübertragungsvorrichtung nach Anspruch 1, bei der:

das Phasenschwankungs-Detektionsmittel die Phasenschwankung detektiert, die in dem von einer repräsentativen Einzelantenne empfangenen Signal auftritt, und

das Phasenschwankungs-Korrekturmittel auf der Grundlage der Phasenschwankung, die in dieser Einzelantenne von dem Phasenschankungs-Detektionsmittel detektiert wird, die Phasenschwankung korngiert, die in den Signalen auftritt, die von sämtlichen Antennen empfangen werden.

3. Drahtlose Datenübertragungsvorrichtung nach Anspruch 1 oder 2, bei der:

das Detektionsmittel für die mittlere Phase eine Mehrzahl von empfangenen Signalen mittelt und die Phase, die aus dieser Mittelung resultiert, als die mittlere Phase der Signale, die von den verschiedenen Antennen empfangen werden, detektiert.

4. Drahtlose Datenübertragungsvorrichtung nach einem der Ansprüche 1-3, bei der:

für das selbe Signale, das von einer Mehrzahl von Antennen empfangen wird, das Empfangssignal-Empfangsrichtungs-Detektionsmittel die Empfangsrichtung des empfangenen Signals auf der Grundlage der Differenz in der mittleren Phase, die von dem Detektionsmittel für die mittlere Phase für jede Antenne detektiert wird, detektiert.

5. Drahtlose Datenübertragungsvorrichtung nach einem der Ansprüche 1-4, bei der:

die drahtlose Datenübertragungsvorrichtung außerdem umfasst:

ein Phasenverschiebungs-Korrekturmittel (C1-C4), das jegliche Verschiebung in der Phase korrigiert, die in dem empfangenen Signal auftritt und in dem Antennensystem unter verschiedenen Antennen hervorgerufen ist; und
das Empfangssignal-Empfangsrichtungs-Detektionsmittel die Empfangsrichtung der empfangenen Signale auf der Grundlage der mittleren Phase der Signale detektiert, die von jeder Antenne empfangen werden, nachdem die Korrektur durch das Phasenverschiebungs-Korrekturmittel vorgenommen wurde.

6. Drahtlose Datenübertragungsvorrichtung nach einem der Ansprüche 1-5, bei der:

die Signale, die von einer Mehrzahl von Antennen empfangen werden, datenmodulierte Signale sind und
die drahtlose Datenübertragungsvorrichtung außerdem umfasst:

ein Daten-Demodulationsmittel (J1-J4), das die Datenmodulation der Signale, die von den verschiedenen Antennen empfangen werden, demoduliert; und

wobei das Detektionsmittel für die mittlere Phase die mittlere Phase der Signale, die von jeder Antenne empfangen werden, nach einer Demodulation der Datenmodulation durch das Daten-Demodulationsmittel und nach einer Korrektur der Phasenschwankung durch das Phasenschwankungs-Korrekturmittel detektiert.

7. Drahtlose Datenübertragungsvorrichtung nach einem der Ansprüche 1-6, bei der:

die drahtlose Datenübertragungsvorrichtung eine Basisstationseinheit eines mobilen Datenübertragungssystems darstellt und
in dieser drahtlosen Datenübertragungsvorrichtung die Mehrzahl von Antennen einen adaptiven Antennenarray ausbilden und die drahtlose Datenübertragungsvorrichtung außerdem umfasst:

ein adaptives Array-Verarbeitungsmittel, das den Prozess einer Erfassung der Summe des Ergebnisses einer Multiplikation der Signale, die von jeder Antenne empfangen werden, mit einer Empfangsgewichtung für jede Antenne als das Signal, das von der Ansammlung dieser Mehrzahl von Antennen empfangen wird, und den Prozess einer Übermittlung von jeder Antenne des Ergebnisses der Multiplikation des Signals ausführt, und zwar in Abhängigkeit von einer Übermittlung mit einer Übermittlungsgewichtung für jede Antenne.

8. Drahtlose Datenübertragungsvorrichtung nach einem der Ansprüche 1-7, bei der:

die drahtlose Dateiübertragungsvorrichtung eine Basisstationseinheit eines mobilen Datenübertragungssystems darstellt, das das CDMA-Protokoll einsetzt,
die Signale, die von der Mehrzahl von Antennen empfangen werden, Spreizungs-Frequenzband-Signale sind,
und die drahtlose Datenübertragungsvorrichtung außerdem umfasst:

ein Entspreizungsmittel, das das Spreizungssignal, das von den verschiedenen Antennen empfangen wird, entspreizt.

**9.** Drahtlose Datenübertragungsvorrichtung nach einem der Ansprüche 1-8, bei der:

die drahtlose Dateiübertragungsvorrichtung eine Mehrzahl von Antennensystemen (A 11-A 14) umfasst,
jedes Antennensystem jeweils eine Antenne, einen Radiofrequenzempfänger (R11-R14), einen Datenmuster-Multiplizierer (J11-J14), einen Phasenschwankungs-Korrekturblock (M11-M14) und einen Block zum Messen einer mittleren Phase (N11-N 14) umfasst,
ein Antennensystem von dieser Mehrzahl von Antennensystemen (A11) als das Referenz-Antennensystem herangezogen wird, und
das Referenz-Antennensystem einen Block (11) zum Messen einer Phasenschwankungsgröße umfasst,
ein Block (12) zum Abschätzen einer gemeinsamen Empfangsrichtung für die Mehrzahl von Antennensystemen vorgesehen ist, und
die Antennen dieser Mehrzahl von Antennensysteme einen adaptiven Antennenarray ausbilden;
wobei in jedem Antennensystem
die Antenne Signale empfängt und die empfangenen Signale an den Radiofrequenzempfänger ausgibt,
der Radiofrequenzempfänger die von den Antennen eingegebenen empfangenen Signale von einem drahtlosen Frequenzsband in ein Basisband-Frequenzband wandelt und die gewandelten empfangenen Signale an den Datenmuster-Multiplizierer ausgibt, und
der Datenmuster-Multiplizierer die von dem Radiofrequenzempfänger eingegebenen Signale so verarbeitet, dass das Ausgangssignal von dem Datenmuster-Multiplizierer bezüglich einer Datenmodulation zu der selben Phase zurückkehrt, und dieser die verarbeiteten Signale an den Phasenschwankungs-Korrekturblock ausgibt;
wobei in dem Referenz-Antennensystem
der Block zum Messen der Phasenschwankungsgröße das Ausgangssignal von einem Datenmuster-Multiplizierer (J11), das für die Antenne des Referenz-Antennensystems bereitgestellt wird, ausgibt, um die Phasenschwankungsgröße des Signals, das von der Antenne empfangen wird, zu detektieren, Korrekturausdrücke erzeugt, die in der Lage sind, die Phasenschwankungsgrößen, die so detektiert wurden, zu korrigieren, und die so erzeugten Korrekturausdrücke an den Phasenschwankungs-Korrekturblock von jedem Antennensystem ausgibt;
wobei in jedem Antennensystem
der Phasenschwankungs-Korrekturblock das Signal, das von dem Datenmuster-Multiplizierer eingegeben wird, mit seiner Datenmodulation multipliziert, demoduliert, um den Korrekturausdruck, der von dem Block zum Messen der Phasenschwankungsgröße des Referenz-Antennensystems eingegeben wird, und das multiplizierte Signal an den Block zum Messen der mittleren Phase ausgibt, und
der Block zum Messen der mittleren Phase das Signal, das von dem Phasenschwankungs-Korrekturblock nach Korrektur einer Phasenschwankung eingegeben wurde, mittelt, die Phase des Signals in Entsprechung zu den Ergebnissen dieser Mittelung als die mittlere Phase detektiert und die Ergebnisse dieser Detektion an den Block zum Abschätzen der Empfangsrichtung ausgibt; und
der Block zum Abschätzen der Empfangsrichtung von den Blöcken zum Messen der mittleren Phase von jedem Antennensystem die mittlere Phase für die Signale, die von jeder der Antennen empfangen werden, als Phaseninformation eingibt und die Empfangsrichtung der empfangenen Signale auf der Grundlage einer Phaseninformation für zwei oder mehr der Antennen abschätzt.

**10.** Drahtlose Datenübertragungsvorrichtung nach Anspruch 9, bei der:

jedes Antennensystem außerdem einen Entspreizungsprozessor (D1-D4) und einen Kalibrier-Gewichtungsmultiplizierer (C1-C4) zwischen dem Radiofrequenzempfänger und dem Datenmuster-Multiplizierer umfasst;
wobei in jedem Antennensystem
der Radiofrequenzempfänger frequenzgewandelte empfangene Signale an den Entspreizungsprozessor ausgibt,
der Entspreizungsprozessor die empfangenen Signale, die von dem Radiofrequenzempfänger eingegeben werden, entspreizt und diese entspreizten empfangenen Signale an den Kalibrier-Gewichtungsmultiplizierer ausgibt,

der Kalibrier-Gewichtungsmultiplizierer die empfangenen Signale, die von dem Entspreizungsprozessor eingegeben werden, mit einem Korrekturausdruck multipliziert, der die Phasenverschiebung, die in jedem Antennensystem von den verschiedenen Antennen auftritt, korrigiert und die empfangenen Signale nach dieser Multiplikation an den Datenmuster-Multiplizierer ausgibt und

der Datenmuster-Multiplizierer an den empfangenen Signalen, die von dem Kalibrier-Gewichtungsmultiplizierer eingegeben werden, eine Verarbeitung vornimmt.

**Revendications**

1. Appareil de communications sans fil qui utilise une pluralité d'antennes (A1-A4) pour recevoir des signaux transmis sans fil depuis le côté émission dans lequel :

   l'appareil de communications sans fil comporte :

   des moyens de détection de fluctuation de phase (1) qui détectent des fluctuations de phase survenant dans le signal dans l'intervalle depuis le côté émission, sur la base d'un signal reçu en provenance du côté émission,
   des moyens de correction de fluctuation de phase (M1-M4) qui corrigent les fluctuations de phase détectées par les moyens de détection de fluctuation de phase en ce qui concerne les signaux reçus par chaque antenne,
   des moyens de détection de phase moyenne (N1-N4) qui détectent la phase moyenne des signaux reçus par chaque antenne après correction de la fluctuation de phase, par les moyens de correction de fluctuation de phase, et
   des moyens de détection de direction d'arrivée de signal reçu (2) qui détectent la direction d'arrivée des signaux reçus sur la base de la phase moyenne des signaux reçus par chaque antenne, détectée par les moyens de détection de phase moyenne.

2. Appareil de communications sans fil selon la revendication 1, dans lequel :

   les moyens de détection de fluctuation de phase détectent la fluctuation de phase survenant dans le signal reçu par une antenne unique représentative, et
   les moyens de correction de fluctuation de phase corrigent la fluctuation de phase survenant dans les signaux reçus par toutes les antennes sur la base de la fluctuation de phase détectée dans cette antenne unique par les moyens de détection de fluctuation de phase.

3. Appareil de communications sans fil selon la revendication 1 ou 2, dans lequel :

   les moyens de détection de phase moyenne mettent en moyenne une pluralité de signaux reçus et détectent la phase qui résulte de cette mise en moyenne en tant que phase moyenne des signaux reçus par les diverses antennes.

4. Appareil de communications sans fil selon l'une quelconque des revendications 1 à 3, dans lequel :

   pour le même signal reçu par une pluralité d'antennes, les moyens de détection de direction d'arrivée de signal reçu détectent la direction d'arrivée du signal reçu sur la base de la différence, entre antennes, dans la phase moyenne détectée par les moyens de détection de phase moyenne pour chaque antenne.

5. Appareil de communications sans fil selon l'une quelconque des revendications 1 à 4, dans lequel :

   l'appareil de communications sans fil comporte en outre :

   des moyens de correction de déphasage (C1-C4) qui corrigent tout déphasage survenant dans le signal reçu qui est provoqué dans le système d'antenne parmi différentes antennes, et
   les moyens de détection de direction d'arrivée de signal reçu détectent la direction d'arrivée de signaux reçus sur la base de la phase moyenne des signaux reçus par chaque antenne, après une correction effectuée par les moyens de correction de déphasage.

**6.** Appareil de communications sans fil selon l'une quelconque des revendications 1 à 5, dans lequel :

les signaux reçus par une pluralité d'antennes sont des signaux modulés par des données, et l'appareil de communications sans fil comporte en outre :

des moyens de démodulation de données (J1-J4) qui démodulent la modulation par des données des signaux reçus par les diverses antennes, et
des moyens de détection de phase moyenne détectent la phase moyenne des signaux reçus par chaque antenne, après une démodulation de la modulation par des données par les moyens de démodulation de données et une correction de la fluctuation de phase par les moyens de correction de fluctuation de phase.

**7.** Appareil de communications sans fil selon l'une quelconque des revendications 1 à 6, dans lequel :

l'appareil de communications sans fil constitue une unité de station de base d'un système de communications mobile, et
dans cet appareil de communications sans fil, la pluralité d'antennes constituent un réseau d'antennes adaptatif, et l'appareil de communications sans fil comporte en outre :

des moyens de traitement à réseau adaptatif qui exécutent le processus consistant à acquérir la somme du résultat de la multiplication des signaux reçus par chaque antenne par un coefficient de pondération de réception pour chaque antenne, en tant que signal reçu par l'ensemble de cette pluralité d'antennes, et le processus consistant à transmettre depuis chaque antenne le résultat de la multiplication du signal soumis à une transmission par un coefficient de pondération de transmission pour chaque antenne.

**8.** Appareil de communications sans fil selon l'une quelconque des revendications 1 à 7, dans lequel :

l'appareil de communications sans fil constitue une unité de station de base d'un système de communications mobile qui adopte le protocole CDMA,
les signaux reçus par la pluralité d'antennes sont des signaux à spectre étalé,
et l'appareil de communications sans fil comporte en outre :

des moyens de dés-étalement qui dés-étalent le signal étalé reçu par les diverses antennes.

**9.** Appareil de communications sans fil selon l'une quelconque des revendications 1 à 8, dans lequel :

l'appareil de communications sans fil comporte une pluralité de systèmes d'antennes (A11-A14),
chaque système d'antenne comporte une antenne, un récepteur RF (R11-R14), un multiplicateur de motif de données (J11-J14), un bloc de correction de fluctuation de phase (M11-M14), et un bloc de mesure de phase moyenne (N11-N14), respectivement,
un système d'antenne parmi cette pluralité de systèmes d'antenne (A11) est choisi pour être le système d'antenne de référence, et
le système d'antenne de référence comporte un bloc de mesure de quantité de fluctuation de phase (11),
un bloc d'estimation de direction d'arrivée commune (12) est agencé pour la pluralité de systèmes d'antenne, et
les antennes de cette pluralité de systèmes d'antenne constituent un réseau d'antennes adaptatif,
dans chaque système d'antenne,
l'antenne reçoit des signaux et délivre en sortie les signaux reçus au récepteur RF,
le récepteur RF convertit l'entrée de signaux reçus depuis l'antenne d'une bande de fréquence sans fil en une bande en bande de base, et délivre en sortie les signaux reçus convertis au multiplicateur de motif de données, et
le multiplicateur de motif de données traite les entrées de signaux depuis le récepteur RF de sorte que la sortie du multiplicateur de motif de données est renvoyée à la même phase en ce qui concerne le modulation de données, et délivre en sortie les signaux traités au bloc de correction de fluctuation de phase,
dans le système d'antenne de référence,
le bloc de mesure de quantité de fluctuation de phase utilise la sortie d'un multiplicateur de motif de données (J11) prévu pour l'antenne du système d'antenne de référence afin de détecter la quantité de fluctuation de phase du signal reçu par l'antenne, génère des termes de correction qui sont capables de corriger les quantités de fluctuation de phase ainsi détectées, et délivre en sortie les termes de correction ainsi générés au bloc de correction de fluctuation de phase de chaque système d'antenne,
dans chaque système d'antenne,

**18**

le bloc de correction de fluctuation de phase multiplie l'entrée de signal depuis le multiplicateur de motif de données, avec sa modulation de données démodulée, par l'entrée de terme de correction venant du bloc de mesure de quantité de fluctuation de phase du système d'antenne de référence, et délivre en sortie le signal multiplié au bloc de mesure de phase moyenne, et

le bloc de mesure de phase moyenne fait une moyenne sur l'entrée de signal venant du bloc de correction de fluctuation de phase après correction de la fluctuation de phase, détecte la phase du signal correspondant aux résultats de cette mise en moyenne, en tant que phase moyenne, et délivre en sortie le résultat de cette détection au bloc d'estimation de direction d'arrivée, et

le bloc d'estimation de direction d'arrivée reçoit en entrée, depuis les blocs de mesure de phase moyenne de chaque système d'antenne, la phase moyenne pour les signaux reçus par chacune des antennes en tant qu'informations de phase, et estime la direction d'arrivée des signaux reçus sur la base des informations de phase pour deux ou plus de deux antennes.

**10.** Appareil de communications sans fil selon la revendication 9, dans lequel :

chaque système d'antenne comporte en outre un processeur de dés-étalement (D1-D4) et un multiplicateur de pondération d'étalonnage (C1-C4) entre le récepteur RF et le multiplicateur de motif de données, dans chaque système d'antenne,

le récepteur RF délivre en sortie des signaux reçus convertis en fréquence au processeur de dés-étalement,

le processeur de dés-étalement dés-étale les entrées de signaux reçues par le récepteur RF et délivre en sortie ces signaux reçus dés-étalés au multiplicateur de pondération d'étalonnage,

le multiplicateur de pondération d'étalonnage multiplie les signaux reçus entrés depuis le processeur de dés-étalement par un terme de correction qui corrige le déplacement de phase survenant dans chaque système d'antenne parmi les différentes antennes, et délivre en sortie les signaux reçus après cette multiplication au multiplicateur de motif de données, et

le multiplicateur de motif de données exécute un traitement sur les signaux reçus entrés depuis le multiplicateur de pondération d'étalonnage.

Fig.1

Fig.2

Fig.3